(19) Europäisches Patentamt
European Patent Office
Office européen des brevets

(11) **EP 1 568 222 B1**

(12) **EUROPEAN PATENT SPECIFICATION**

(45) Date of publication and mention of the grant of the patent:
**02.01.2019 Bulletin 2019/01**

(21) Application number: **03783480.1**

(22) Date of filing: **13.11.2003**

(51) Int Cl.:
*H04N 7/12* (2006.01)     *H04N 11/02* (2006.01)
*H04N 11/04* (2006.01)

(86) International application number:
**PCT/US2003/036413**

(87) International publication number:
**WO 2004/054225 (24.06.2004 Gazette 2004/26)**

(54) **ENCODING OF VIDEO CROSS-FADES USING WEIGHTED PREDICTION**

CODIERUNG VON VIDEO-CROSS FADES DURCH VERWENDUNG GEWICHTETERPRÄDIKTION

CODAGE DE FONDUS ENCHAINES VIDEO PAR PREDICTION PONDEREE

(84) Designated Contracting States:
**DE ES FR GB IT**

(30) Priority: **04.12.2002 US 430793 P**

(43) Date of publication of application:
**31.08.2005 Bulletin 2005/35**

(73) Proprietor: **Thomson Licensing**
**92130 Issy-les-Moulineaux (FR)**

(72) Inventor: **BOYCE, Jill, MacDonald**
**Manalapan, NJ 07726 (US)**

(74) Representative: **Huchet, Anne et al**
**InterDigital CE Patent Holdings**
**20, rue Rouget de Lisle**
**92130 Issy-les-Moulineaux (FR)**

(56) References cited:
**US-B2- 6 570 923     US-B2- 6 606 409**

• **DONG TIAN ET AL: "Coding of faded scene transitions", INTERNATIONAL CONFERENCE ON IMAGE PROCESSING (ICIP),, vol. 2, 22 September 2002 (2002-09-22), pages 505-508, XP010608019, ISBN: 978-0-7803-7622-9**

• **KAZUTO KAMIKURA ET AL: "Global Brightness-Variation Compensation for Video Coding", IEEE TRANSACTIONS ON CIRCUITS AND SYSTEMS FOR VIDEO TECHNOLOGY, IEEE SERVICE CENTER, PISCATAWAY, NJ, US, vol. 8, no. 8, 1 December 1998 (1998-12-01), XP011014527, ISSN: 1051-8215**

• **YONEYAMA ET AL.: 'Fast dissolve operations for Mpeg video contents' IEEE 2000 2000, pages 291 - 294, XP010529981**

• **HANNUKSELA: "Generalized B/MH-Picture Averaging", 3. JVT MEETING; 60. MPEG MEETING; 06-05-2002 - 10-05-2002; FAIRFAX,US; (JOINT VIDEO TEAM OF ISO/IEC JTC1/SC29/WG11 AND ITU-T SG.16 ),, no. JVT-C077, 10 May 2002 (2002-05-10), XP030005186, ISSN: 0000-0442**

• **KARL LILLEVOLD ET AL: "Improved Direct Mode for B Pictures in H.26L", 11. VCEG MEETING; 22-08-2000 - 25-08-2000; PORTLAND, OREGON, US;(VIDEO CODING EXPERTS GROUP OF ITU-T SG.16),, no. q15k44, 16 August 2000 (2000-08-16), XP030003136, ISSN: 0000-0463**

• **KIKUCHI: "Multiframe MC using frame interpolation", 2. JVT MEETING; 29-01-2002 - 01-02-2002; GENEVA, CH; (JOINT VIDEO TEAMOF ISO/IEC JTC1/SC29/WG11 AND ITU-T SG.16 ),, no. JVT-B075, 1 February 2002 (2002-02-01) , XP030005075, ISSN: 0000-0443**

**Description**

CROSS-REFERENCE TO RELATED APPLICATION

This application claims the benefit of U.S. Provisional Application Serial No. 60/430,793 (Attorney Docket No. PU020487), filed December 4, 2002 and entitled "ENCODING OF VIDEO CROSS-FADES USING WEIGHTED PREDICTION", which is incorporated herein by reference in its entirety.

FIELD OF THE INVENTION

The present invention is directed towards video encoders, and in particular, towards an apparatus and method for effectively producing video cross-fades between pictures.

BACKGROUND OF THE INVENTION

Video data is generally processed and transferred in the form of bit streams. Typical video compression coders and decoders ("CODECs") gain much of their compression efficiency by forming a reference picture prediction of a picture to be encoded, and encoding the difference between the current picture and the prediction. The more closely that the prediction is correlated with the current picture, the fewer bits that are needed to compress that picture, thereby increasing the efficiency of the process. Thus, it is desirable for the best possible reference picture prediction to be formed.
In many video compression standards, including Moving Picture Experts Group ("MPEG")-1, MPEG-2 and MPEG-4, a motion compensated version of a previous reference picture is used as a prediction for the current picture, and only the difference between the current picture and the prediction is coded. When a single picture prediction ("P" picture) is used, the reference picture is not scaled when the motion compensated prediction is formed. When bi-directional picture predictions ("B" pictures) are used, intermediate predictions are formed from two different pictures, and then the two intermediate predictions are averaged together, using equal weighting factors of (½, ½) for each, to form a single averaged prediction.
In some video sequences, in particular those with fades, the current picture to be coded is more strongly correlated to the reference picture scaled by a weighting factor than to the reference picture itself. The Joint Video Team ("JVT") video compression standard allows weighting factors and offsets to be sent for each reference picture. The standard specifies how the decoder will use the weighting factors, but it does not specify how an encoder might determine an appropriate weighting factor. For sequences that include cross-fades, determining the appropriate weighting factors and reference pictures to use is quite difficult. Document "coding of faded scene transitions" by Dong Tian et Al, XP10608019, discloses the coding of cross-fade pictures using the fade-in and fade-out pictures of the cross-fade and weighting factors determined by a simple calculation.

SUMMARY OF THE INVENTION

These and other drawbacks and disadvantages of the prior art are addressed by an apparatus and method that efficiently compress video cross-fades using JVT weighted prediction. The end-points of a cross-fade are determined and used as reference pictures for encoding pictures in the cross-fade region.
An apparatus and method are provided for encoding video signal data for a cross-fade picture disposed between a fade-out or start picture and a fade-in or end picture, where the encoder portion includes a reference picture weighting factor unit for assigning weighting factors corresponding to each of the fade-out start picture and the fade-in end picture, respectively, and the method for encoding cross-fades between pictures includes identifying pictures between which a cross-fade is desired, determining appropriate end-points for the cross-fade, and encoding the end-points prior to encoding the cross-fade picture.
These and other aspects, features and advantages of the present disclosure will become apparent from the following description of exemplary embodiments, which is to be read in connection with the accompanying drawings.

BRIEF DESCRIPTION OF THE DRAWINGS

The present invention may be better understood with reference to the following exemplary figures, in which:

Figure 1 shows a block diagram for a standard video encoder;
Figure 2 shows a block diagram for a video encoder with implicit reference picture weighting for video cross-fades;
Figure 3 shows a block diagram for a video encoder with explicit reference picture weighting for video cross-fades;
Figure 4 shows a block diagram for a video decoder with explicit reference picture weighting for video cross-fades;

Figure 5 shows a pictorial representation of a video cross-fade between a pair of pictures; and

Figure 6 shows a flowchart for an exemplary encoding process.

DETAILED DESCRIPTION OF PREFERRED EMBODIMENTS

An apparatus and method are disclosed for encoding of video cross-fades using weighted prediction, including motion vector estimation and adaptive reference picture weighting factor assignment. In some video sequences, in particular those with fading, the current picture or image block to be coded is more strongly correlated to a reference picture scaled by a weighting factor than to the reference picture itself. Video encoders without weighting factors applied to reference pictures encode fading sequences very inefficiently. When weighting factors are used in encoding, a video encoder needs to determine both weighting factors and motion vectors, but the best choice for each of these depends on the other.

Hence, a method is described to efficiently compress video cross-fades using JVT weighted prediction. The end-points of a cross-fade are first determined and used as the reference pictures for encoding the pictures in the cross-fade region.

The present description illustrates the principles of the invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means that can provide those functionalities as equivalent to those shown herein.

In some video sequences, in particular those with fading, the current picture or image block to be coded is more strongly correlated to a reference picture scaled by a weighting factor than to the reference picture itself. Video encoders without weighting factors applied to reference pictures encode fading sequences very inefficiently.

In the Joint Video Team ("JVT") video compression standard, each P picture can use multiple reference pictures to form a picture's prediction, but each individual macroblock or macroblock partition (of size 16x8, 8x16, or 8x8) uses only a single reference picture for prediction. In addition to coding and transmitting the motion vectors, a reference picture index is transmitted for each macroblock or macroblock partition, indicating which reference picture is used. A limited set of possible reference pictures is stored at both the encoder and decoder, and the number of allowable reference pictures is transmitted. Unlike in previous standards, such as MPEG-2, a JVT encoder has considerable flexibility in that previously coded pictures can be used as reference pictures.

In the JVT standard for bi-predictive pictures (also called "B" pictures), two predictors are formed for each macroblock or macroblock partition, each of which can be from a separate reference picture, and the two predictors are averaged together to form a single averaged predictor. For bi-predictively coded motion blocks, the reference pictures can both be from the forward direction, both be from the backward direction, or one each from the forward and backward directions.

Two lists are maintained of the available reference pictures that may be used for prediction. The two reference pictures are referred to as the List 0 and List 1 predictors. An index for each reference picture is coded and transmitted, ref_idx_l0 and ref_idx_l1, for the List 0 and List 1 reference pictures, respectively.

The JVT standard provides two modes of weighted prediction, which allows weighting factors and/or offsets to be applied to reference pictures when forming a prediction. The weighting factor to be used is based on the reference picture index (or indices in the case of bi=prediction) for the current macroblock or macroblock partition. The reference picture indices are either coded in the bitstream or may be derived, such as for skipped or direct mode macroblocks. A single weighting factor and single offset are associated with each reference picture index for all of the slices of the current picture. In explicit mode, these parameters are coded in the slice header. In implicit mode, these parameters are derived. The weighting factors and offset parameter values are constrained to allow for 16-bit arithmetic operations in the inter-prediction process. The encoder may select either implicit mode or explicit mode for each coded picture.

JVT bi-predictive or "B" pictures allow adaptive weighting between the two predictions, i.e., Pred = [(P0) * (Pred0)] + [(P1) * (Pred1)] + D, where P0 and P1 are weighting factors, Pred0 and Pred1 are the reference picture predictions for List 0 and List 1 respectively, and D is an offset.

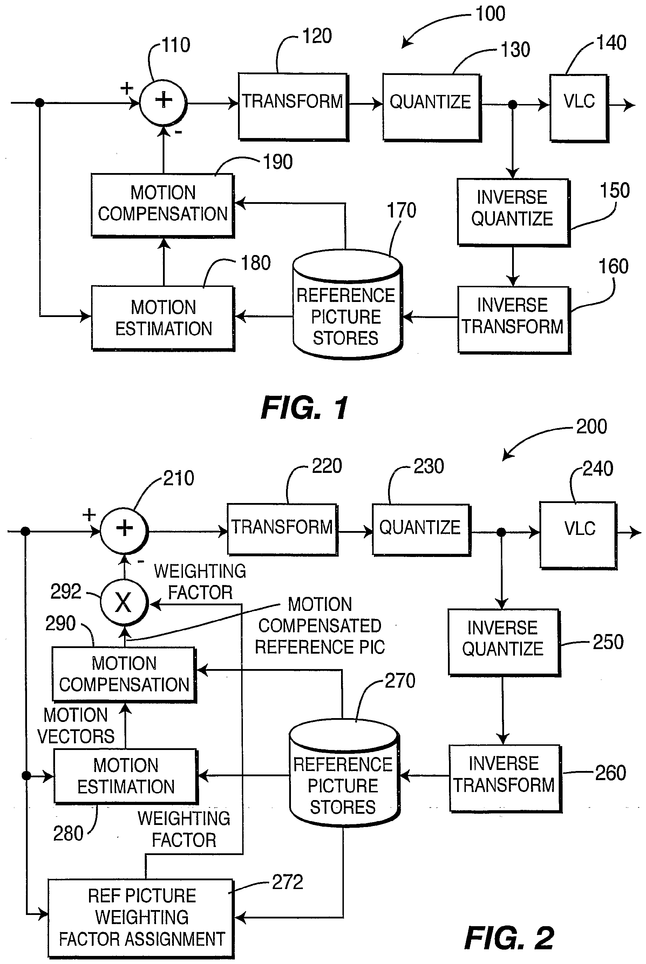

As shown in Figure 1, a standard video encoder is indicated generally by the reference numeral 100. An input to the encoder 100 is connected in signal communication with a non-inverting input of a summing junction 110. The output of the summing junction 110 is connected in signal communication with a block transform function 120. The transform 120 is connected in signal communication with a quantizer 130. The output of the quantizer 130 is connected in signal communication with a variable length coder ("VLC") 140, where the output of the VLC 140 is an externally available output of the encoder 100.

The output of the quantizer 130 is further connected in signal communication with an inverse quantizer 150. The inverse quantizer 150 is connected in signal communication with an inverse block transformer 160, which, in turn, is connected in signal communication with a reference picture store 170. A first output of the reference picture store 170 is connected in signal communication with a first input of a motion estimator 180. The input to the encoder 100 is further connected in signal communication with a second input of the motion estimator 180. The output of the motion estimator 180 is connected in signal communication with a first input of a motion compensator 190. A second output of the reference picture store 170 is connected in signal communication with a second input of the motion compensator 190. The output of the motion compensator 190 is connected in signal communication with an inverting input of the summing junction 110.

Turning to Figure 2, a video encoder with implicit reference picture weighting is indicated generally by the reference numeral 200. An input to the encoder 200 is connected in signal communication with a non-inverting input of a summing junction 210. The output of the summing junction 210 is connected in signal communication with a block transformer 220. The transformer 220 is connected in signal communication with a quantizer 230. The output of the quantizer 230 is connected in signal communication with a VLC 240, where the output of the VLC 240 is an externally available output of the encoder 200.

The output of the quantizer 230 is further connected in signal communication with an inverse quantizer 250. The inverse quantizer 250 is connected in signal communication with an inverse block transformer 260, which, in turn, is connected in signal communication with a reference picture store 270. A first output of the reference picture store 270 is connected in signal communication with a first input of a reference picture weighting factor assignor 272. The input to the encoder 200 is further connected in signal communication with a second input of the reference picture weighting factor assignor 272. A second output of the reference picture store 270 is connected in signal communication with a second input of the motion estimator 280.

The input to the encoder 200 is further connected in signal communication with a third input of the motion estimator 280. The output of the motion estimator 280, which is indicative of motion vectors, is connected in signal communication with a first input of a motion compensator 290. A third output of the reference picture store 270 is connected in signal communication with a second input of the motion compensator 290. The output of the motion compensator 290, which is indicative of a motion compensated reference picture, is connected in signal communication with a first input of a multiplier or reference picture weighting applicator 292. Although an exemplary multiplier embodiment is shown, the reference picture weighting applicator 292 may be implemented in alternate ways, such as, for example, by a shift register. The output of the reference picture weighting factor assignor 272, which is indicative of a weighting factor, is connected in signal communication with a second input of the reference picture weighting applicator 292. The output of the reference picture weighting applicator 292 is connected in signal communication with an inverting input of the summing junction 210.

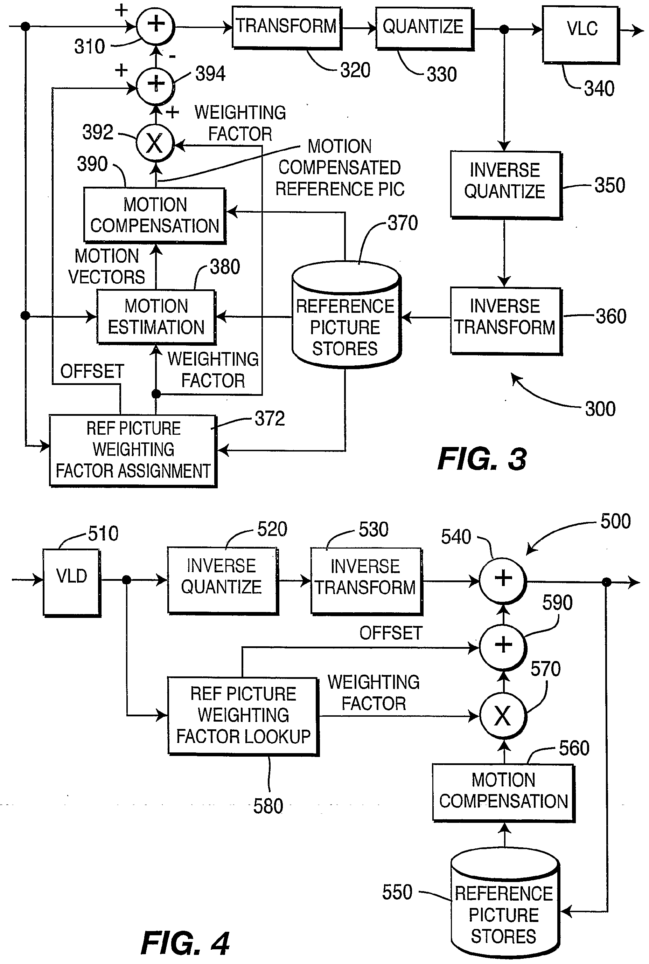

Turning to Figure 3, a video encoder with explicit reference picture weighting is indicated generally by the reference numeral 300. An input to the encoder 300 is connected in signal communication with a non-inverting input of a summing junction 310. The output of the summing junction 310 is connected in signal communication with a block transformer 320. The transformer 320 is connected in signal communication with a quantizer 330. The output of the quantizer 330 is connected in signal communication with a VLC 340, where the output of the VLC 340 is an externally available output of the encoder 300.

The output of the quantizer 330 is further connected in signal communication with an inverse quantizer 350. The inverse quantizer 350 is connected in signal communication with an inverse block transformer 360, which, in turn, is connected in signal communication with a reference picture store 370. A first output of the reference picture store 370 is connected in signal communication with a first input of a reference picture weighting factor assignor 372. The input to the encoder 300 is further connected in signal communication with a second input of the reference picture weighting factor assignor 372. A first output of the reference picture weighting factor assignor 372, which is indicative of a weighting factor, is connected in signal communication with a first input of a motion estimator 380. A second output of the reference picture store 370 is connected in signal communication with a second input of the motion estimator 380.

The input to the encoder 300 is further connected in signal communication with a third input of the motion estimator 380. The output of the motion estimator 380, which is indicative of motion vectors, is connected in signal communication with a first input of a motion compensator 390. A third output of the reference picture store 370 is connected in signal communication with a second input of the motion compensator 390. The output of the motion compensator 390, which is indicative of a motion compensated reference picture, is connected in signal communication with a first input of a multiplier or reference picture weighting applicator 392. A second output of the reference picture weighting factor assignor 372, which is indicative of a weighting factor, is connected in signal communication with a second input of the reference picture weighting applicator 392. The output of the reference picture weighting applicator 392 is connected in signal communication with a first non-inverting input of a summing junction 394. A third output of the reference picture weighting factor assignor 372, which is indicative of an offset, is connected in signal communication with a second non-inverting input of the summing junction 394. The output of the summing junction 394 is connected in signal communication with an inverting input of the summing junction 310.

As shown in Figure 4, a video decoder for explicit reference picture weighting is indicated generally by the reference numeral 500. The video decoder 500 includes a variable length decoder ("VLD") 510 connected in signal communication with an inverse quantizer 520. The inverse quantizer 520 is connected in signal communication with an inverse transformer 530. The inverse transformer 530 is connected in signal communication with a first input terminal of a summing junction 540, where the output of the summing junction 540 provides the output of the video decoder 500. The output of the summing junction 540 is connected in signal communication with a reference picture store 550. The reference picture store 550 is connected in signal communication with a motion compensator 560, which is connected in signal communication with a first input of a multiplier or reference picture weighting applicator 570. As will be recognized by those of ordinary skill in the pertinent art, the decoder 500 for explicit weighted prediction may also be used for implicit weighted prediction.

The VLD 510 is further connected in signal communication with a reference picture weighting factor lookup 580 for providing a coefficient index to the lookup 580. A first output of the lookup 580 is for providing a weighting factor, and is connected in signal communication to a second input of the reference picture weighting applicator 570. The output of the reference picture weighting applicator 570 is connected in signal communication to a first input of a summing junction 590. A second output of the lookup 580 is for providing an offset, and is connected in signal communication to a second input of the summing junction 590. The output of the summing junction 590 is connected in signal communication with a second input terminal of the summing junction 540.

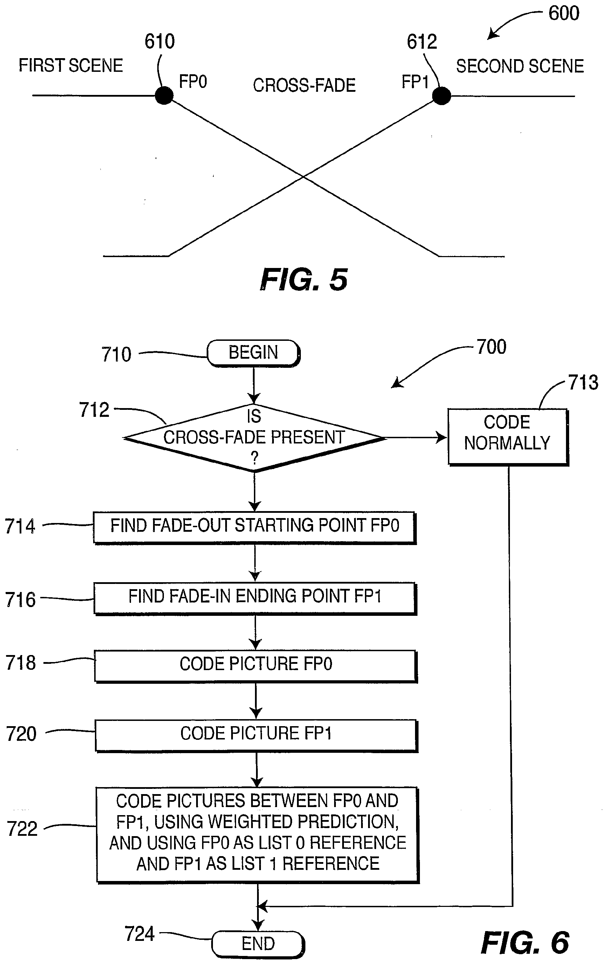

As shown in Figure 5, a picture cross-fade is indicated generally by the reference numeral 600. The exemplary picture cross-fade 600 includes a fade-out or starting picture 610, identified as FP0, and a fade-in or ending picture 612, identified as FP1.

Turning now to Figure 6, an exemplary process for encoding video signal data for an image block is indicated generally by the reference numeral 700. The process 700 is implemented with an encoder, such as the encoder 200 or 300 of Figures 2 and 3, respectively. The process 700 includes a start block 710 that passes control to a decision block 712. The decision block 712 determines whether a cross-fade is present, and, if none is present, passes control to a function block 713. The function block 713 performs normal encoding and passes control to an end block 724.

However, if the decision block 712 finds a cross-fade, it passes control to a function block 714. The function block 714 finds the fade-out starting point, FP0, and passes control to a function block 716, which finds the fade-in ending point FP1. The block 716 passes control to a function block 718, which codes the fade-out start picture FP0 and passes control to a function block 720. The block 720 codes the fade-in end picture FP1 and passes control to a function block 722.

The function block 722, in turn, codes pictures disposed in display order between FP0 and FP1, using weighted prediction with the picture FP0 as the list 0 reference and the picture FP1 as the list 1 reference. The function block 722 passes control to the end block 724.

An authoring tool used for video cross-fades between a pair of pictures includes a video encoder, such as the encoder 200 of Figure 2, and operates on prestored video content. In addition to the uncompressed video content, some additional information may be available such as decision lists and editing splice points. The video encoder in an authoring tool does not necessarily need to operate in real time. Special effects such as fades and cross-fades can be applied in the authoring tool.

Various techniques are well known for detecting fades and cross-fades, also known as dissolves, in video sequences. When encoding a particular picture, for each macroblock or macroblock partition, a JVT encoder must select a coding decision mode, one or two reference pictures, and one or more motion vectors. When a JVT encoder uses weighted prediction, once per picture or slice it may also select a weighting factor to be applied for each reference index used. One or more reference indices refer to each allowable reference picture, so multiple weights can be used for each individual reference picture.

The authoring tool detects when a cross-fade is taking place. The authoring tool has sufficient information to detect when a cross-fade is taking place either - because it applied the cross-fade itself, or because it read it from a decision list, or because it employs a fade detection algorithm. For a cross-fade, a picture identified as the fade-out starting point is identified as FP0 and the fade-in ending point picture is identified as FP1. When a cross-fade is detected, the encoder codes pictures FP0 and FP1 prior to coding the pictures between FP0 and FP1 in display order, which are referred to as the cross-fade pictures. Thus, a feature of the present invention is that the fade-in end picture, FP1, is coded before the intermediate pictures.

It is common in video encoders to use a fixed pattern of the I, P and B picture coding types, and for the coding order to differ from the display order. For example, such a common pattern might comprise:

Common Coding Order: I0 P3 B1 B2 P6 B4 B5 P9 B7 B8
Common Display Order: I0 B1 B2 P3 B4 B5 P6 B7 B8 P9

For this common pattern, picture P3 is coded before the intermediate B1 and B2 pictures. The B1 and B2 pictures use I0 and P3 as reference picture in its prediction process.

The JVT standard does not require the use of fixed picture coding type patterns, and does not suggest methods by which an encoder can adjust the patterns to maximize coding efficiency. In accordance with the current invention, coding efficiency of cross-fading sequences can be improved by adjusting picture coding type and coding order. If, for example, picture 0 and picture 9 were identified as the fade-in start and fade-out end pictures, respectively, the following coding and display order could be used:

Inventive Coding Order: I0 P9 B1 B2 B3 B4 B5 B6 B7 B8
Inventive Display Order: I0 B1 B2 B3 B4 B5 B6 B7 B8 P9

When a cross-fade picture is encoded, the encoder orders the reference picture lists, using reference picture selection reordering if necessary, such that FP0 is the first picture on List 0 and FP1 is the first picture on List 1. This provides additional coding efficiency, because the reference index of 0, which refers to the first picture in the reference picture list, can be coded using a lesser number of bits than other reference indices. Then a weighting-factor is selected for the reference indices corresponding to each of FP0 and FP1, based on the relative contribution of the first picture and the second picture in the composition of the current picture. If the formula used in creating the cross-fade picture is known, either because the authoring tool created the cross-fade, or from side-information, then the weighting factor from the composition formula can be used. If the exact formula is not known, a weighting factor can be computed using any of several different algorithms, such as those based on relative distance of the current picture from FP0 and FP1, for example.

This above described algorithm can be applied for all coded pictures in the cross-fade region, or may be applied only for those pictures that are marked to be stored as reference pictures. In alternate embodiments, either implicit mode or explicit mode weighted prediction may be used to code the cross-fade pictures. When explicit mode is used, any weighting factors may be used. When implicit mode is used, the weighting factors depend on the relative distance of the current picture from FP0 and FP1.

This system and technique may be applied to either Predictive "P" pictures, which are encoded with a single predictor, or to Bi-predictive "B" pictures, which are encoded with two predictors. The decoding processes, which are present in both encoder and decoders, are described below for the P and B picture cases. Alternatively, this technique may also be applied to coding systems using the concepts similar to I, B, and P pictures.

The same weighting factors can be used for single directional prediction in B pictures and for bi-directional prediction in B pictures. When a single predictor is used for a macroblock, in P pictures or for single directional prediction in B pictures, a single reference picture index is transmitted for the block. After the decoding process step of motion compensation produces a predictor, the weighting factor is applied to predictor. The weighted predictor is then added to the coded residual, and clipping is performed on the sum, to form the decoded picture. For use for blocks in P pictures or for blocks in B pictures that use only List 0 prediction, the weighted predictor is formed as:

$$Pred = W0 * Pred0 + D0 \qquad\qquad (1)$$

where W0 is the weighting factor associated with the List 0 reference picture, D0 is the offset associated with the List 0 reference picture, and Pred0 is the motion-compensated prediction block from the List 0 reference picture.

For use for blocks in B pictures that use only List 1 prediction, the weighted predictor is formed as:

$$Pred = W1 * Pred1 + D1 \qquad\qquad (2)$$

where W1 is the weighting factor associated with the List 1 reference picture, D1 is the offset associated with the List 1 reference picture, and Pred1 is the motion-compensated prediction block from the List 1 reference picture.

The weighted predictors may be clipped to guarantee that the resulting values will be within the allowable range of pixel values, typically 0 to 255. The precision of the multiplication in the weighting formulas may be limited to any pre-determined number of bits of resolution.

In the bi-predictive case, reference picture indexes are transmitted for each of the two predictors. Motion compensation is performed to form the two predictors. Each predictor uses the weighting factor associated with its reference picture index to form two weighted predictors. The two weighted predictors are then averaged together to form an averaged predictor, which is then added to the coded residual..

For use for blocks in B pictures that use List 0 and List 1 predictions, the weighted predictor is formed as:

$$Pred = (P0 * Pred0 + D0 + P1 * Pred1 + D1 )/2 \qquad (3)$$

Clipping may be applied to the weighted predictor or any of the intermediate values in the calculation of the weighted predictor to guarantee that the resulting values will be within the allowable range of pixel values, typically 0 to 255.

Thus, a weighting factor is applied to the reference picture prediction of a video compression encoder and decoder that uses multiple reference pictures. The weighting factor adapts for individual motion blocks within a picture, based on the reference picture index that is used for that motion block. Because the reference picture index is already transmitted in the compressed video bitstream, the additional overhead to adapt the weighting factor on a motion block basis is dramatically reduced. All motion blocks that are coded with respect to the same reference picture apply the same weighting factor to the reference picture prediction.

In the Joint Model ("JM") software of the JVT committee, an a posteriori method using rate distortion optimization is used for selection of motion vectors, macroblock partitioning, prediction mode, and reference picture indices. In this method, a range of allowable values for each of these choices is tested and a cost is determined for each choice. The choice that leads to the minimum cost is selected.

Motion estimation techniques have been widely studied. For each motion block of a picture being coded, a motion vector is chosen that represents a displacement of the motion block from a reference picture. In an exhaustive search method within a search region, every displacement within a pre-determined range of offsets relative to the motion block position is tested. The test includes calculating the sum of the absolute difference ("SAD") or mean squared error ("MSE") of each pixel in the motion block in the current picture with the displaced motion block in a reference picture. The offset with the lowest SAD or MSE is selected as the motion vector. Numerous variations on this technique have been proposed, such as three-step search and rate-distortion optimized motion estimation, all of which include the step of computing the SAD or MSE of the current motion block with a displaced motion block in a reference picture.

Computational costs for determining motion vectors and adaptive reference picture weighting factors can be reduced by using an iterative process, while still selecting motion vectors and weighting factors that are able to achieve high compression efficiencies. An exemplary embodiment motion vector and weighting factor determination process is described assuming that a single weighting factor is applied to the entire reference picture, although the principles of the invention should not be construed as being so limited. The process could also be applied over smaller regions of the picture, such as slices, for example. In addition, although one exemplary embodiment is described as using only a single reference picture, the principles may also be applied to multiple reference picture prediction and to bi-predictive pictures.

Calculation of the motion vector for a motion block can typically best be done when the weighting factor to be used is known. In an exemplary embodiment, an estimate of the weighting factor is formed, using the reference picture and the current picture pixel values. The weighting factor may be limited to a number of bits of resolution. If the weighting factor is very close to 1, there is no need to consider the weighting factor in the motion estimation process, and normal motion estimation can be done with the weighting factor assumed to be equal to 1. Otherwise, the weighting factor estimate is applied to the reference picture. Motion estimation is then performed using any method which calculates SAD or MSE, but with the SAD or MSE calculation performed between the current picture motion block and the displaced motion block in the weighted version of the reference picture, rather than the un-weighted reference picture. The estimation of the weighting factor can be refined after the motion vectors have been selected, if necessary.

The current motion vectors are applied to the weighted reference picture to form the weighted, motion compensated reference picture. A difference measure between the weighted, motion compensated reference picture and the current picture is computed. If the difference measure is lower than a threshold, or lower than the previous best difference measure, the process is complete, and the current candidate motion vectors and weighting factor are accepted.

If the difference measure is higher than some threshold, the weighting factor can be refined. In this case, a motion compensated but un-weighted reference picture is formed based on the current candidate motion vectors. The weighting factor estimate is refined using the motion compensated reference picture and the current picture, rather than using the un-compensated reference picture, as was done in forming the initial estimate of the weighting factor.

In one embodiment, the initial estimate of the weighting factor, w, is the ratio between the average value of the pixels in the current picture, *cur*, divided by the average value of the pixels in the reference picture, *ref*, where:

$$w = \text{avg}(cur) / \text{avg}(ref) \tag{4}$$

The refinement estimates are the ratio between the average of pixels in the current picture and the average of pixels in the motion compensated reference picture, *mcref*, where:

$$w = \text{avg}(cur) / \text{avg}(mcref) \tag{5}$$

The difference measure *diff* is the absolute value of the average of pixel differences between the current picture, *cur*, and the weighted motion compensated reference picture, *wmcref*, where:

$$diff = | \sum cur - wmcref | \tag{6}$$

In another embodiment, the difference measure is the sum of the absolute differences of the pixels in the current picture and in the weighed motion compensated reference picture, where:

$$diff = \sum | cur - wmcref | \tag{7}$$

When block-based motion estimation is performed, the same pixel in a reference picture is used for numerous SAD calculations. In an exemplary embodiment during the motion estimation process, once a weighting factor has been applied to a pixel in a reference picture, the weighted pixel is stored, in addition to the normal pixel. The storage may be done either for a region of the picture, or for the entire picture.

The weighted reference picture values may be clipped to be stored with the same number of bits as an un-weighted reference, such as 8 bits, for example, or may be stored using more bits. If clipping is performed for the motion compensation process, which is more memory efficient, the weighting factor is reapplied to the reference picture for the actual selected motion vector, the difference is calculated using additional bits, and the clipping is performed after the difference in order to avoid mismatch with a decoder, which might otherwise occur if the decoder does not perform clipping after the weighting factor is applied.

When multiple reference pictures are used to encode a picture, a separate weighting factor can be calculated for each reference picture. During motion estimation, a motion vector and a reference picture index are selected for each motion block. For each iteration of the process, motion vectors and weighting factors are found for each reference picture.

In a preferred embodiment, during motion estimation, the best reference picture for a given motion block is determined. Calculation of the difference measure is done separately for each reference picture, with only those motion blocks that use that reference picture being used in the calculation. Refinement of the weighting factor estimate for a given reference picture also uses only those motion blocks that are coded using that reference picture. For bi-predictive coding, weighting factors and motion vectors can be determined separately for each of the two predictions, which will be averaged together to form the averaged prediction.

The principles of the present invention can be applied to many different types of motion estimation algorithms.

When used with hierarchical approaches, the iteration of weighting factor selection and motion vector selection can be used with any level of the motion estimation hierarchy. For example, the iterative approach could be used with integer picture element ("pel") motion estimation. After the weighting factor and integer motion vectors are found using the provided iterative algorithm, the sub-pel motion vectors may be found without requiring another iteration of the weighting factor selection.

These and other features and advantages of the present invention may be readily ascertained by one of ordinary skill in the pertinent art based on the teachings herein. It is to be understood that the principles of the present invention may be implemented in various forms of hardware, software, firmware, special purpose processors, or combinations thereof.

Most preferably, the principles of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art without departing from the scope or spirit of the present invention. All such changes and modifications are intended to be included within the scope of the present invention as set forth in the appended claims.

**Claims**

**1.** A video encoder (200, 300) for encoding video signal data, the encoder **characterized by**:

means for accessing at least one cross-fade picture disposed temporally between a fade-out start picture and a fade-in end picture in display order, wherein said fade-out start picture is a starting picture of said cross-fade and said fade-in end picture is an ending picture of said cross-fade, wherein said fade-out start picture and said fade-in end picture are encoded prior to said at least one cross-fade picture;
a reference picture store (270, 370) for storing said fade-out start picture and said fade-in end picture as reference pictures for coding the at least one cross-fade picture;
a reference picture weighting applicator (292, 392); and
a reference picture weighting factor unit (272, 372) in signal communication with the reference picture weighting applicator for assigning weighting factors corresponding to each of the fade-out start picture and the fade-in end picture, respectively, for coding the at least one cross-fade picture,

wherein a separate weighting factor for the currently encoded cross-fade picture is determined for each reference picture, **characterized in that** said reference picture weighting factor unit uses initial weighting factor estimates for the fade-out start picture and the fade-in end picture to perform motion estimation and to form motion compensated reference pictures, and subsequently refines said weighting factors based on said motion compensated reference pictures and the at least one cross-fade picture,
wherein an initial weighing factor estimate corresponding to a reference picture is formed using the reference picture and the at least one cross-fade picture pixel values,
wherein the motion estimation is performed between a current cross-fade picture and a weighted version of the reference picture, wherein motion vectors resulted from the motion estimation are applied to the reference picture to form the motion compensated reference picture that is unweighted to refine said weighting factors,
wherein said motion vectors are applied to the weighted version of the reference picture to form a weighted motion compensated reference picture,
wherein a difference measure between said weighted motion compensated reference picture and the current cross-fade picture is computed, and wherein said refinement is performed only if said difference measure is higher than a threshold or higher than a previous best difference measure.

2. A video encoder as defined in Claim 1, further **characterized in that** said fade-out start picture is placed as the first picture in list 0 of a reference picture list and said fade-in end picture is placed as the first picture in list 1 of said reference picture list.

3. A video encoder as defined in Claim 1, further **characterized by** a motion compensation unit (290, 390) in signal communication with the reference picture weighting applicator for providing at least one of a motion compensated fade-out start picture and a motion compensated fade-in end picture responsive to the reference picture weighting factor unit for coding the at least one cross-fade picture.

4. A video encoder as defined in Claim 3 usable with bi-predictive picture predictors, the encoder further **characterized by** prediction means for forming first and second predictors from the weighted and motion compensated fade-out start and fade-in end pictures, respectively.

5. A video encoder as defined in Claim 1, further **characterized by** a motion estimation unit (380) in signal communication with the reference picture weighting factor unit for providing motion estimation responsive to weighting factor in an explicit mode of operation.

6. A method (700) for encoding cross-fades between pictures, the method **characterized by**:

   identifying pictures for which a cross-fade is defined;
   determining (714, 716) a fade-out start picture and a fade-in end picture from pictures for which said cross-fade is defined, wherein said fade-out start picture is a starting picture of said cross-fade and said fade-in end picture is an ending picture of said cross-fade;
   encoding (718, 720) said fade-out start picture and said fade-in end picture, prior to encoding (722) at least one cross-fade picture disposed temporally between said fade-out start picture and said fade-in end picture in display order; and
   encoding (722) said at least one cross-fade picture, wherein said fade-out start picture and said fade-in end picture are used as reference pictures,

   wherein a separate weighting factor for the currently encoded cross-fade picture is determined for each reference picture, **characterized in that** initial weighting factor estimates are used for the fade-out start picture and the fade-in end picture to perform motion estimation and to form motion compensated reference pictures, and wherein said weighting factors are refined based on said motion compensated reference pictures and the at least one cross-fade picture,
   wherein an initial weighing factor estimate corresponding to a reference picture is formed using the reference picture and the at least one cross-fade picture pixel values,
   wherein the motion estimation is performed between a current cross-fade picture and a weighted version of the reference picture, wherein motion vectors resulted from the motion estimation are applied to the reference picture to form the motion compensated reference picture that is unweighted to refine said weighting factors,
   wherein said motion vectors are applied to the weighted version of the reference picture to form a weighted motion compensated reference picture,
   wherein a difference measure between said weighted motion compensated reference picture and the current cross-fade picture is computed, and wherein said refinement is performed only if said difference measure is higher than a threshold or higher than a previous best difference measure.

7. A method as defined in Claim 6 **characterized in that** said fade-out start picture is placed as the first picture in list 0 of a reference picture list and said fade-in end picture is placed as the first picture in list 1 of said reference picture list.

8. A method as defined in Claim 6 further **characterized by**:

   computing motion vectors corresponding to the difference between the at least one cross-fade picture and at least one of the fade-out start picture and the fade-in end picture;
   motion compensating the at least one of the fade-out start picture and the fade-in end picture in correspondence with the motion vectors;
   multiplying the motion compensated at least one of the fade-out start picture and the fade-in end picture by the assigned weighting factor, respectively, to form at least one weighted motion compensated reference picture; and subtracting the at least one weighted motion compensated reference picture from the at least one cross-fade picture; and

encoding a signal indicative of the difference between the at least one cross-fade picture and the at least one weighted motion compensated reference picture.

9. A method as defined in Claim 8 **characterized in that** exactly two reference pictures are used, the exactly two reference pictures comprising the pre-coded fade-out start picture, FP0, and the fade-in end picture, FP1.

10. A method as defined in Claim 9, further **characterized by**:

combining the motion compensated fade-out start picture with the motion compensated fade-in end picture prior to subtracting from the at least one cross-fade picture.

## Patentansprüche

1. Videocodierer (200, 300) zum Codieren von Videosignaldaten, wobei der Codierer **gekennzeichnet ist durch**:

Mittel zum Zugreifen auf mindestes ein Überblendbild, das in der Anzeigereihenfolge zeitlich zwischen einem Ausblend-Anfangsbild und einem Einblend-Endbild angeordnet ist, wobei das Ausblend-Anfangsbild ein Anfangsbild des Überblendens ist und das Einblend-Endbild ein Endbild des Überblendens ist, wobei das Ausblend-Anfangsbild und das Einblend-Endbild vor dem mindestens einen Überblendbild codiert werden;
einen Referenzbildspeicher (270, 370) zum Speichern des Ausblend-Anfangsbilds und des Einblend-Endbilds als Referenzbilder zum Codieren des mindestens einen Überblendbilds;
eine Referenzbild-Gewichtungsanwendungseinrichtung (292, 392); und
eine Referenzbild-Gewichtungsfaktoreinheit (272, 372) in Signalkommunikation mit der Referenzbild-Gewichtungsanwendungseinrichtung zum Zuweisen von Gewichtungsfaktoren, die jedem Ausblend-Anfangsbild bzw. Einblend-Endbild entsprechen, um das mindestens eine Überblendbild zu codieren,

wobei für jedes Referenzbild ein getrennter Gewichtungsfaktor für das gegenwärtig codierte Überblendbild bestimmt wird,
**dadurch gekennzeichnet, dass** die Referenzbild-Gewichtungsfaktoreinheit für das Ausblend-Anfangsbild und für das Einblend-Endbild Anfangsgewichtungsfaktor-Schätzwerte verwendet, um eine Bewegungsschätzung auszuführen und um bewegungskompensierte Referenzbilder zu erzeugen, und nachfolgend die Gewichtungsfaktoren auf der Grundlage der bewegungskompensierten Referenzbilder und des mindestens einen Überblendbilds verbessert,
wobei unter Verwendung des Referenzbilds und der mindestens einen Überblendbild-Pixelwerte ein Anfangsgewichtungsfaktor-Schätzwert, der einem Referenzbild entspricht, erzeugt wird,
wobei die Bewegungsschätzung zwischen einem gegenwärtigen Überblendbild und einer gewichteten Version des Referenzbilds ausgeführt wird,
wobei auf das Referenzbild Bewegungsvektoren, die sich aus der Bewegungsschätzung ergeben haben, angewendet werden, um das bewegungskompensierte Referenzbild zu erzeugen, dessen Gewichtung entfernt wird, um die Gewichtungsfaktoren zu verbessern,
wobei die Bewegungsvektoren auf die gewichtete Version des Referenzbilds angewendet werden, um ein gewichtetes bewegungskompensiertes Referenzbild zu erzeugen,
wobei zwischen dem gewichteten bewegungskompensierten Referenzbild und dem gegenwärtigen Überblendbild ein Differenzmaß berechnet wird, und
wobei die Verbesserung nur ausgeführt wird, wenn das Differenzmaß größer als ein Schwellenwert oder größer als ein vorhergehendes bestes Differenzmaß ist.

2. Videocodierer nach Anspruch 1, ferner **dadurch gekennzeichnet, dass** das Ausblend-Anfangsbild als das erste Bild in der Liste 0 einer Referenzbildliste angeordnet ist und dass das Einblend-Endbild als das erste Bild in der Liste 1 der Referenzbildliste angeordnet ist.

3. Videocodierer nach Anspruch 1, ferner **gekennzeichnet durch** eine Bewegungskompensationseinheit (290, 390) in Signalkommunikation mit der Referenzbild-Gewichtungsanwendungseinrichtung, um in Ansprechen auf die Referenzbild-Gewichtungsfaktoreinheit ein bewegungskompensiertes Ausblend-Anfangsbild und/oder ein bewegungskompensiertes Einblend-Endbild bereitzustellen, um das mindestens eine Überblendbild zu codieren.

4. Videocodierer nach Anspruch 3, der mit Doppelvorversage-Bildprädiktoren verwendbar ist, wobei der Codierer ferner **gekennzeichnet ist durch** Vorhersagemittel, um aus dem gewichteten und bewegungskompensierten Ausblend-Anfangsbild bzw. Einblend-Endbild einen ersten und einen zweiten Prädiktor zu erzeugen.

5. Videocodierer nach Anspruch 1, ferner **gekennzeichnet durch** eine Bewegungsschätzeinheit (380) in Signalkommunikation mit der Referenzbild-Gewichtungsfaktoreinheit, um in Ansprechen auf den Gewichtungsfaktor in einer expliziten Betriebsart eine Bewegungsschätzung bereitzustellen.

6. Verfahren (700) zum Codieren von Überblendungen zwischen Bildern, wobei das Verfahren **gekennzeichnet ist durch**:

   Identifizieren von Bildern, für die eine Überblendung definiert ist;
   Bestimmen (714, 716) eines Ausblend-Anfangsbilds und eines Einblend-Endbilds aus Bildern, für die die Überblendung definiert ist, wobei das Ausblend-Anfangsbild ein Anfangsbild der Überblendung ist und das Einblend-Endbild ein Endbild der Überblendung ist;
   Codieren (718, 720) des Ausblend-Anfangsbilds und des Einblend-Endbilds vor dem Codieren (722) mindestens eines Überblendbilds, das in der Anzeigereihenfolge zeitlich zwischen dem Ausblend-Anfangsbild und dem Einblend-Endbild angeordnet ist; und
   Codieren (722) des mindestens einen Überblendbilds, wobei das Ausblend-Anfangsbild und das Einblend-Endbild als Referenzbilder verwendet werden;

   wobei für jedes Referenzbild ein getrennter Gewichtungsfaktor für das gegenwärtig codierte Überblendbild bestimmt wird,
   **dadurch gekennzeichnet, dass** für das Ausblend-Anfangsbild und für das Einblend-Endbild Anfangsgewichtungsfaktor-Schätzwerte verwendet werden, um eine Bewegungsschätzung auszuführen und um bewegungskompensierte Referenzbilder zu erzeugen, und wobei die Gewichtungsfaktoren auf der Grundlage der bewegungskompensierten Referenzbilder und des mindestens einen Überblendbilds verbessert werden,
   wobei unter Verwendung des Referenzbilds und der mindestens einen Überblendbild-Pixelwerte ein Anfangsgewichtungsfaktor-Schätzwert, der einem Referenzbild entspricht, erzeugt wird,
   wobei die Bewegungsschätzung zwischen einem gegenwärtigen Überblendbild und einer gewichteten Version des Referenzbilds ausgeführt wird,
   wobei auf das Referenzbild Bewegungsvektoren, die sich aus der Bewegungsschätzung ergeben haben, angewendet werden, um das bewegungskompensierte Referenzbild zu erzeugen, dessen Gewichtung entfernt wird, um die Gewichtungsfaktoren zu verbessern,
   wobei die Bewegungsvektoren auf die gewichtete Version des Referenzbilds angewendet werden, um ein gewichtetes bewegungskompensiertes Referenzbild zu erzeugen,
   wobei zwischen dem gewichteten bewegungskompensierten Referenzbild und dem gegenwärtigen Überblendbild ein Differenzmaß berechnet wird, und
   wobei die Verbesserung nur ausgeführt wird, wenn das Differenzmaß größer als ein Schwellenwert oder größer als ein vorhergehendes bestes Differenzmaß ist.

7. Verfahren nach Anspruch 6, **dadurch gekennzeichnet, dass** das Ausblend-Anfangsbild als das erste Bild in der Liste 0 einer Referenzbildliste angeordnet ist und dass das Einblend-Endbild als das erste Bild in der Liste 1 der Referenzbildliste angeordnet ist.

8. Verfahren nach Anspruch 6, ferner **gekennzeichnet durch**:

   Berechnen von Bewegungsvektoren entsprechend der Differenz zwischen dem mindestens einen Überblendbild und dem Ausblend-Anfangsbild und/oder dem Einblend-Endbild;
   Bewegungskompensieren des Ausblend-Anfangsbilds und/oder des Einblend-Endbilds entsprechend den Bewegungsvektoren;
   Multiplizieren des bewegungskompensierten Ausblend-Anfangsbilds und/oder Einblend-Endbilds jeweils mit dem zugewiesenen Gewichtungsfaktor, um mindestens ein gewichtetes bewegungskompensiertes Referenzbild zu erzeugen; und
   Subtrahieren des mindestens einen bewegungskompensierten Referenzbilds von dem mindestens einen Überblendbild; und

Codieren eines Signals, das die Differenz zwischen dem mindestens einen Überblendbild und dem mindestens einen bewegungskompensierten Referenzbild angibt.

**9.** Verfahren nach Anspruch 8,
**dadurch gekennzeichnet, dass** genau zwei Referenzbilder verwendet werden, wobei die genau zwei Referenzbilder das vorcodierte Ausblend-Anfangsbild FP0 und das Einblend-Endbild FP1 umfassen.

**10.** Verfahren nach Anspruch 9, ferner **gekennzeichnet durch**
Kombinieren des bewegungskompensierten Ausblend-Anfangsbilds mit dem bewegungskompensierten Einblend-Endbild vor dem Subtrahieren von dem mindestes einen Überblendbild.

## Revendications

**1.** Codeur vidéo (200, 300) pour coder des données de signal vidéo, le codeur étant **caractérisé par** :

un moyen pour accéder à au moins une image de fondu enchaîné placée temporellement entre une image de départ de fermeture en fondu et une image de fin d'ouverture en fondu par ordre d'affichage, où ladite image de départ de fermeture en fondu est une image de départ dudit fondu enchaîné et ladite image de fin d'ouverture en fondu est une image de fin dudit fondu enchaîné, où ladite image de départ de fermeture en fondu et ladite image de fin d'ouverture en fondu sont codées avant ladite au moins une image de fondu enchaîné ;
une mémoire d'images de référence (270, 370) pour stocker ladite image de départ de fermeture en fondu et ladite image de fin d'ouverture en fondu comme images de référence pour coder l'au moins une image de fondu enchaîné ;
un applicateur de pondération des images de référence (292, 392) ; et
une unité de facteur de pondération des images de référence (272, 372) communiquant par signaux avec l'applicateur de pondération des images de référence pour attribuer des facteurs de pondération correspondant à chacune de l'image de départ de fermeture en fondu et de l'image de fin d'ouverture en fondu, respectivement, pour coder l'au moins une image de fondu enchaîné,

où un facteur de pondération distinct pour l'image de fondu enchaîné actuellement codée est déterminé pour chaque image de référence,
**caractérisé en ce que** ladite unité de facteur de pondération des images de référence utilise des estimations de facteur de pondération initiales pour l'image de départ de fermeture en fondu et l'image de fin d'ouverture en fondu pour procéder à l'estimation de mouvement et pour former des images de référence à compensation de mouvement, puis affine lesdits facteurs de pondération en fonction desdites images de référence à compensation de mouvement et de l'au moins une image de fondu enchaîné,
où une estimation de facteur de pondération initiale correspondant à une image de référence est formée à l'aide de l'image de référence et des valeurs de pixels de l'au moins une image de fondu enchaîné,
où l'estimation de mouvement est effectuée entre une image de fondu enchaîné courante et une version pondérée de l'image de référence,
où des vecteurs de mouvement issus de l'estimation de mouvement sont appliqués à l'image de référence pour former l'image de référence à compensation de mouvement non pondérée pour affiner lesdits facteurs de pondération,
où lesdits vecteurs de mouvement sont appliqués à la version pondérée de l'image de référence pour former une image de référence à compensation de mouvement pondérée,
où une mesure de différence entre ladite image de référence à compensation de mouvement pondérée et l'image de fondu enchaîné courante est calculée, et
où ledit affinement est effectué uniquement si ladite mesure de différence est supérieure à un seuil ou supérieure à une meilleure mesure de différence précédente.

**2.** Codeur vidéo tel que défini dans la revendication 1, **caractérisé en outre en ce que** ladite image de départ de fermeture en fondu est placée comme première image dans la liste 0 d'une liste d'images de référence et ladite image de fin d'ouverture en fondu est placée comme première image dans la liste 1 de ladite liste d'images de référence.

**3.** Codeur vidéo tel que défini dans la revendication 1, **caractérisé en outre par** une unité de compensation de mouvement (290, 390) qui communique par signaux avec l'applicateur de pondération des images de référence pour fournir au moins une image de départ de fermeture en fondu à compensation de mouvement et une image de fin d'ouverture en fondu à compensation de mouvement en réponse à l'unité de facteur de pondération des images de référence pour coder l'au moins une image de fondu enchaîné.

4. Codeur vidéo tel que défini dans la revendication 3 utilisable avec des prédicteurs d'image biprédictives, le codeur étant en outre **caractérisé par** un moyen de prédiction pour former des premier et deuxième prédicteurs à partir des images de départ de fermeture en fondu et de fin d'ouverture en fondu pondérées et à compensation de mouvement, respectivement.

5. Codeur vidéo tel que défini dans la revendication 1, **caractérisé en outre par** une unité d'estimation de mouvement (380) qui communique par signaux avec l'unité de facteur de pondération des images de référence pour fournir une estimation de mouvement en réponse au facteur de pondération dans un mode de fonctionnement explicite.

6. Procédé (700) pour coder des fondus enchaînés entre des images, le procédé étant **caractérisé par** :

l'identification d'images pour lesquelles un fondu enchaîné est défini ;
la détermination (714, 716) d'une image de départ de fermeture en fondu et d'une image de fin d'ouverture en fondu à partir d'images pour lesquelles ledit fondu enchaîné est défini, où ladite image de départ de fermeture en fondu est une
image de départ dudit fondu enchaîné et ladite image de fin d'ouverture en fondu est une image de fin dudit fond enchaîné ;
le codage (718, 720) de ladite image de départ de fermeture en fondu et de ladite image de fin d'ouverture en fondu, avant le codage (722) d'au moins une image de fondu enchaîné placée temporellement entre ladite image de départ de fermeture en fondu et ladite image de fin d'ouverture en fondu par ordre d'affichage ; et
le codage (722) de ladite au moins une image de fondu enchaîné, où ladite image de départ de fermeture en fondu et ladite image de fin d'ouverture en fondu sont utilisées comme images de référence,

où un facteur de pondération distinct pour le facteur de l'image de fondu enchaîné actuellement codée est déterminé pour chaque image de référence,
**caractérisé en ce que** lesdites estimations de facteurs de pondération initiales sont utilisées pour l'image de départ de fermeture en fondu et l'image de fin d'ouverture en fondu pour procéder à l'estimation de mouvement et pour former des images de référence à compensation de mouvement, et où lesdits facteurs de pondération sont affinés en fonction desdites images de référence à compensation de mouvement et de l'au moins une image de fondu enchaîné,
où une estimation de facteur de pondération initiale correspondant à une image de référence est formée à l'aide de l'image de référence et des valeurs de pixels de l'au moins une image de fondu enchaîné,
où l'estimation de mouvement est effectuée entre une image de fondu enchaîné courante et une version pondérée de l'image de référence,
où des vecteurs de mouvement issus de l'estimation de mouvement sont appliqués à l'image de référence pour former l'image de référence à compensation de mouvement non pondérée pour affiner lesdits facteurs de pondération,
où lesdits vecteurs de mouvement sont appliqués à la version pondérée de l'image de référence pour former une image de référence à compensation de mouvement pondérée,
où une mesure de différence entre ladite image de référence à compensation de mouvement pondérée et l'image de fondu enchaîné courante est calculée, et
où ledit affinement est effectué uniquement si ladite mesure de différence est supérieure à un seuil ou supérieure à une meilleure mesure de différence précédente.

7. Procédé tel que défini dans la revendication 6, **caractérisé en ce que** ladite image de départ de fermeture en fondu est placée comme première image dans la liste 0 d'une liste d'images de référence et ladite image de fin d'ouverture en fondu est placée comme première dans la liste 1 de ladite liste d'images de référence.

8. Procédé selon la revendication 6, **caractérisé en outre par** :

le calcul de vecteurs de mouvement correspondant à la différence entre l'au moins une image de fondu enchaîné et au moins l'une de l'image de départ de fermeture en fondu et de l'image de fin d'ouverture en fondu ;
la compensation de mouvement de l'au moins une de l'image de départ de fermeture en fondu et de l'image de fin d'ouverture en fondu en correspondance avec les vecteurs de mouvement ;

la multiplication d'au moins l'une de l'image de départ de fermeture en fondu et de l'image de fin d'ouverture en fondu par le facteur de pondération attribué, respectivement, pour former au moins une image de référence à compensation de mouvement pondérée ; et

la soustraction de l'au moins une image de référence à compensation de mouvement pondérée de l'au moins une image de fondu enchaîné ; et

le codage d'un signal indicatif de la différence entre l'au moins une image de fondu enchaîné et l'au moins une image de référence à compensation de mouvement pondérée.

9. Procédé tel que défini selon la revendication 8, **caractérisé en ce que** précisément deux images de référence sont utilisées, les précisément deux images de référence comprenant l'image de départ de fermeture en fondu précodée, FP0, et l'image de fin d'ouverture en fondu, FP1.

10. Procédé tel que défini selon la revendication 9, **caractérisé en outre par** :

la combinaison de l'image de départ de fermeture en fondu à compensation de mouvement avec l'image de fin d'ouverture en fondu à compensation de mouvement avant soustraction de l'au moins une image de fondu enchaîné.

**FIG. 1**

**FIG. 2**

EP 1 568 222 B1

FIG. 3

FIG. 4

600

610                                              612
FIRST SCENE                                            SECOND SCENE
            FP0        CROSS-FADE        FP1

**FIG. 5**

---

700

710 — ( BEGIN )

713

712 — IS CROSS-FADE PRESENT ? ——→ CODE NORMALLY

714 — FIND FADE-OUT STARTING POINT FP0

716 — FIND FADE-IN ENDING POINT FP1

718 — CODE PICTURE FP0

720 — CODE PICTURE FP1

722 — CODE PICTURES BETWEEN FP0 AND FP1, USING WEIGHTED PREDICTION, AND USING FP0 AS LIST 0 REFERENCE AND FP1 AS LIST 1 REFERENCE

724 — ( END )

**FIG. 6**

**EP 1 568 222 B1**

## REFERENCES CITED IN THE DESCRIPTION

**Patent documents cited in the description**

• US 43079302 P

**Non-patent literature cited in the description**

• **DONG TIAN.** *coding of faded scene transitions*